# EUROPEAN PATENT SPECIFICATION

(11) **EP 3 855 030 B1**
(45) Date of publication and mention of the grant of the patent: **08.11.2023**
(21) Application number: 20214752.6
(22) Date of filing: 16.12.2020
(51) Int. Cl.: F16B 37/08, B60R 16/02, H02G 3/32

(54) **A FIXING CLIP**
BEFESTIGUNGSCLIP
PINCE DE FIXATION

(30) Priority: 22.01.2020 EP 20153237; 07.10.2020 EP 20200611
(43) Date of publication of application: 28.07.2021
(73) Proprietor: Illinois Tool Works INC., Glenview, IL 60025 (US)
(72) Inventor: COCCOZ, Andrea, Illinois, 60025 (US); GIACOMELLI, Ilaria, Illinois, 60025 (US)
(74) Representative: HGF

(56) References cited:
- DE-A- 3 325 686
- DE-A1-102010 032 778
- GB-A- 2 173 250
- US-A1- 2010 104 394

## Description

### Technical Field of Invention

The invention relates to a fixing clip. In particular, the invention relates to a fixing clip for fixing to a ridged component, such as a threaded stud or welding pin. The invention also relates to an assembly comprising a fixing clip.

### BACKGROUND

US 20100104394 discusses a mount including a post and a push nut. At least one locking wedge allows the push nut to slide along a longitudinal axis of the post in a first direction and prevents the push nut from sliding along the longitudinal axis of the post in a second direction opposite the first direction.

### BRIEF DESCRIPTION OF THE DRAWINGS

Example embodiment(s) of the invention are illustrated in Figures 15-19,24 and 25, whereas the other figures illustrate examples not covered by the invention.
Figure 1 illustrates a side view of an assembly having an exemplary fixing clip and a threaded stud;
Figure 2 illustrates a perspective view of the assembly of Figure 1;
Figures 3 & 4 illustrate perspective views of a fixing clip and a threaded stud;
Figures 5 & 6 illustrate top and bottom views of a fixing clip and a threaded stud;
Figure 7 illustrates a side perspective view of the fixing clip and the threaded stud of Figure 5;
Figure 8 illustrates a side section view of the fixing clip and the threaded stud of Figure 5;
Figures 9 & 10 illustrate top and bottom views of a second exemplary fixing clip and a threaded stud;
Figure 11 illustrates a side perspective view of the fixing clip and the threaded stud of Figure 9;
Figures 12 to14 illustrate perspective views of a fixing clip and a threaded stud;
Figure 15 illustrates a top view of an assembly having a third example embodiment of a fixing clip and a threaded, welded stud (a) when closed and (b) when open;
Figure 16 illustrates a close-up perspective view of the fixing point on the stud, (a) where two ribs grip the welded stud to ensure the retention force, and (b) where a support plane of the fixing clip is lower than the channel underside and where the interference with insulating foam (located below the cable channel) ensures a preloading (or biasing force);
Figure 17 illustrates a top-, bottom- and perspective side-view of a fixing clip when engaged with the stud;
Figure 18 illustrates a perspective sectional side-view the fixing clip engaged with the stud, where the sloped profile and the shape of the ribs guide the stud in the correct position during insertion of the stud into the fixing clip;
Figure 19 illustrates a perspective side-view of a close-up of the fixing clip engaged with the stud (a) focussing on the two raised ribs, and (b) on the four vertical abutments;
Figure 20 illustrates a top view of an assembly having fourth and fifth exemplary embodiments of a fixing clip and a threaded, welded stud (a) when closed and (b) when open;
Figure 21 illustrates a close-up perspective view of the fixing point on the stud (both of them can cover the tolerances), (a) where two ribs grip the welded stud ensuring a retention force, and (b) where the support plane of the fixing clip is lower than the underside of the cable channel, and where the interference with the insulating foam, located below the cable channel, ensures a preloading;
Figures 22a to 22d illustrate perspective views of the fourth embodiment of the fixing clip of Figure 20;
Figure 23 illustrates (a) perspective sectional close-up view and (b) a top view of the clip in engagement with the stud shown in Figure 22;
Figure 24 illustrates various perspective views of the fifth embodiment of the fixing clip of Figure 20, and
Figure 25 (a) perspective sectional close-up view and (b) a top view of the clip in engagement with the stud shown in Figure 24.

### DETAILED DESCRIPTION

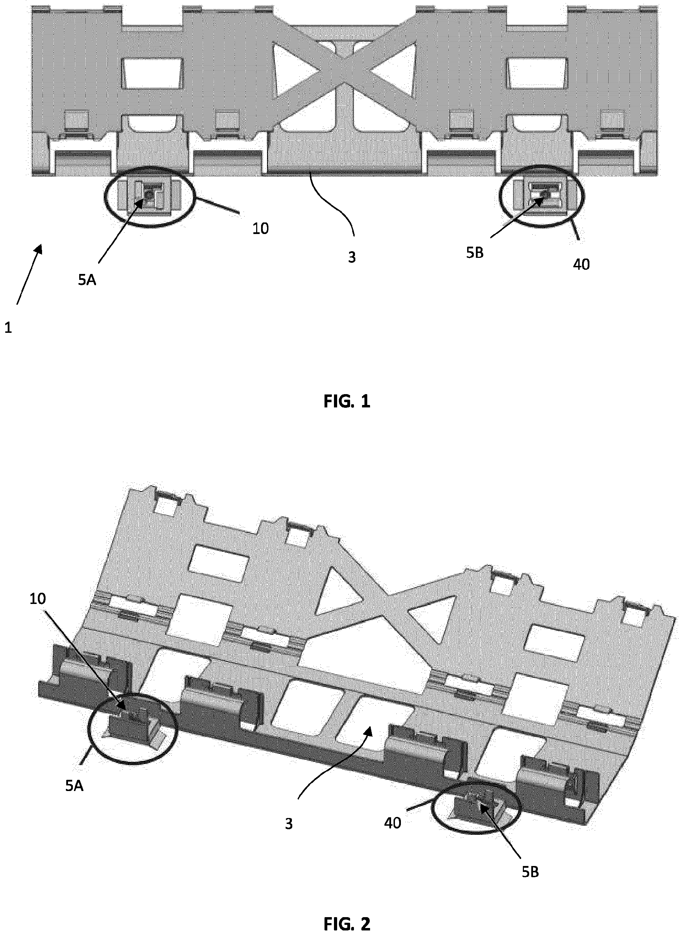

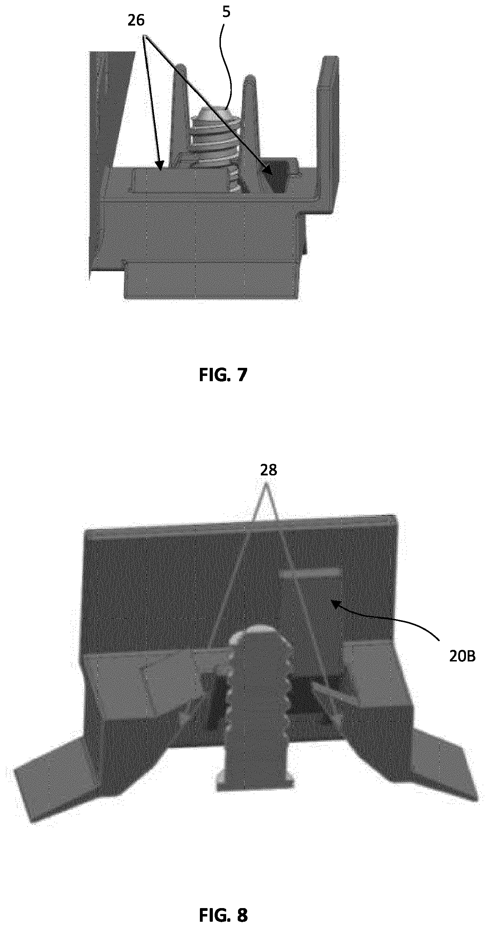

Figures 1 to 14 relate to an assembly 1 having a first exemplary fixing clip 10 and a second fixing clip 40 and these figures will be referred to interchangeably throughout this description. The illustrated assembly 1 includes a cable channel 3 and two fixing clips 10, 40 integral with a side wall 4 of the cable channel 3 and secured to respective threaded studs 5A, 5B. Studs 5A, 5B may be welded, or otherwise secured, to a base plate or similar surface (not shown) against which the assembly 1 is mounted.

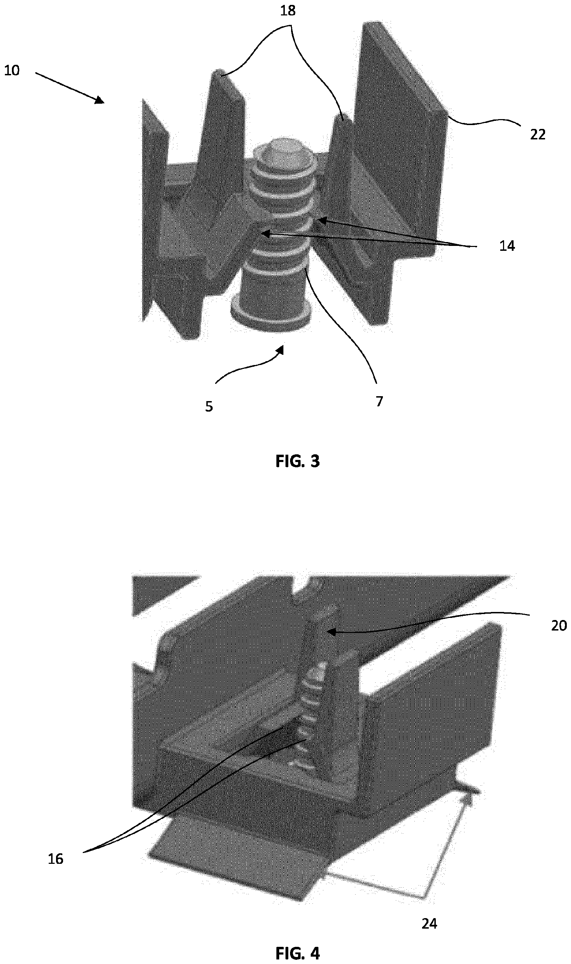

As shown in Figure 3, the fixing clip 10 includes a pair of resiliently deformable ribs 14 having a corresponding edge 16 for gripping a thread 7 of the stud 5. It would be apparent the edge 16 may be a uniform edge or may be serrated or have one or more teeth for gripping the stud 5. The pair of ribs 14 define a gap therebetween for receiving the stud 5. The first and second ribs 14 are shaped to guide the stud 5 into the gap. As illustrated, one way of achieving this is to angle the ribs 14 in the direction of insertion of the stud 5 into the gap, the thread 7 is able to pass over the ribs 14 by deforming the ribs 14 away from one another. However, when trying to move the stud 5 in an extraction direction opposite to the insertion direction, the ribs 14 engage the thread 7 and prevent the stud 5 from being removed from the fixing clip 10, thus providing a secure fixation between the fixing clip 10 and the stud 5. A further advantage of ribs 14 angled in the insertion direction is to guide the stud 5 towards the gap between the edges 16 when the assembly 1 is pressed onto the studs 5 formed on a base plate. Thus, each of the first and second ribs 14 are arranged to engage the stud 5 and shaped such that movement of the stud 5 in a first direction relative to the fixing clip 10 causes each of the first and second ribs 14 to deform. Furthermore, movement of the stud 5 in the extraction direction is prevented by engagement between each rib 14 and the stud 5. The first and second ribs 14 each comprise an engaging surface arranged such that upon application of an external force to the engaging surface, for example by a tool or a finger and/or thumb of a user, each of the first and second ribs 14 are configured to deform so as to release the stud 5 for movement in the extraction direction.

The fixing clip 10 also includes a second pair of ribs 26 extending from a body 11 of the fixing clip 10. The body 11 includes an opening 13 for receiving the stud 5, and the second pair of ribs 26 from the body 11 into the opening 13. The second pair of ribs 26 are shaped to guide the stud 5 towards a predetermined position between the first pair of ribs 14. As shown, the second pair of ribs 26 guide the stud 5 to a central position within the fixing clip 10. However, it would be apparent that this was not essential and that the second pair of ribs 26 may be shaped to guide the stud 5 to a different predetermined position as required. As shown in Figure 3, this is achieved by angling the respective underside 28 of each of the second pair of ribs 26 in the insertion direction of the stud 5. The second pair of ribs 26 are shown illustrated in a perpendicular direction to the first pair of ribs 14. The free ends of the second pair of ribs 26 also define a tolerance of the fixing clip 10 within which the stud 5 may be located. By arranging the edges 16 of the first pair of ribs 14 accordingly, it is possible to provide an elongate gap within which the stud 5 may be secured. This provides a fixing clip 10 having increased tolerance of the location of the stud 5, which is advantageous as the absolute placement of each stud is less critical while still achieving a secure fixation between the assembly 1 and the stud 5.

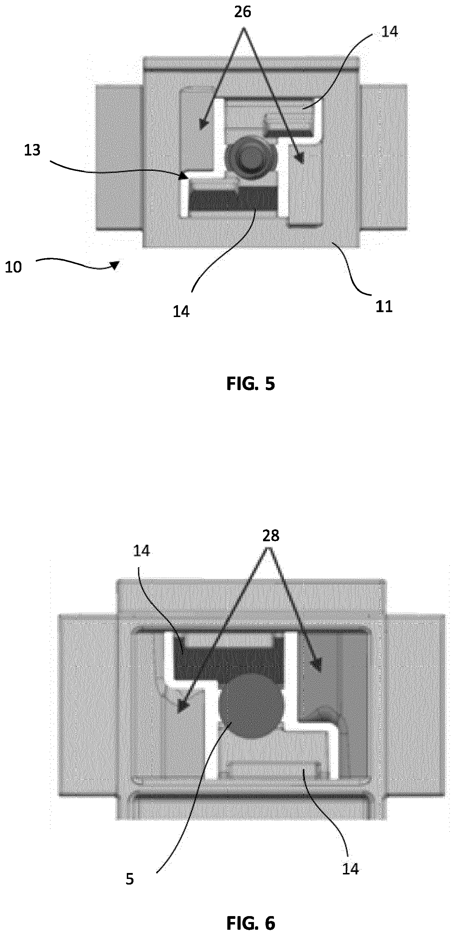

The present fixing clip 10 releasably secures the assembly 1 to the stud 5, as it is possible to release the grip of the ribs 14 on the stud 5 using a lever 18 secured to each of the respective ribs 14. Each lever 18 has an engaging surface 20 for applying a load to a respective rib 14 to move the rib 14 in an opening direction. As shown in the Figures, the levers 18 are opposed to one another, and as such the engaging surfaces 20 are also opposed to one another. Thus, applying the load to the levers 18 will push the levers 18, and therefore the ribs 14, apart from one another which will space the edges 16 from the stud 5 and allow the stud 5 to be moved in the extraction direction. The levers 18 are also shown offset to one another in a lateral direction that is perpendicular to the insertion direction of the stud 5. This provides a more ergonomic opening mechanism for a user as they can easily push the levers 18 using a thumb and finger of a hand. As shown in Figure 5, the edge 16 of the ribs 14 only extend partially across a width of the rib 14 and partially overlap the lever 18. However it would be apparent this was merely exemplary and that other rib configurations which would achieve the described functionality were possible.

When the assembly 1 is mounted to the base plate, the base plate applies a load to a pair of resiliently deformable wings 24 of the fixing clip 10. This results in a biasing force being applied to the fixing clip 10 in the extraction direction. This provides a more robust fixation between the fixing clip 10 and the stud 5, as the biasing force acts to pull the stud 5 out of the fixing clip 10 which causes the ribs 14 to engage further with the stud 5 and reducing any relative movement between the stud 5 and the ribs 14 when the fixing clip 10 is secured to the stud 5.

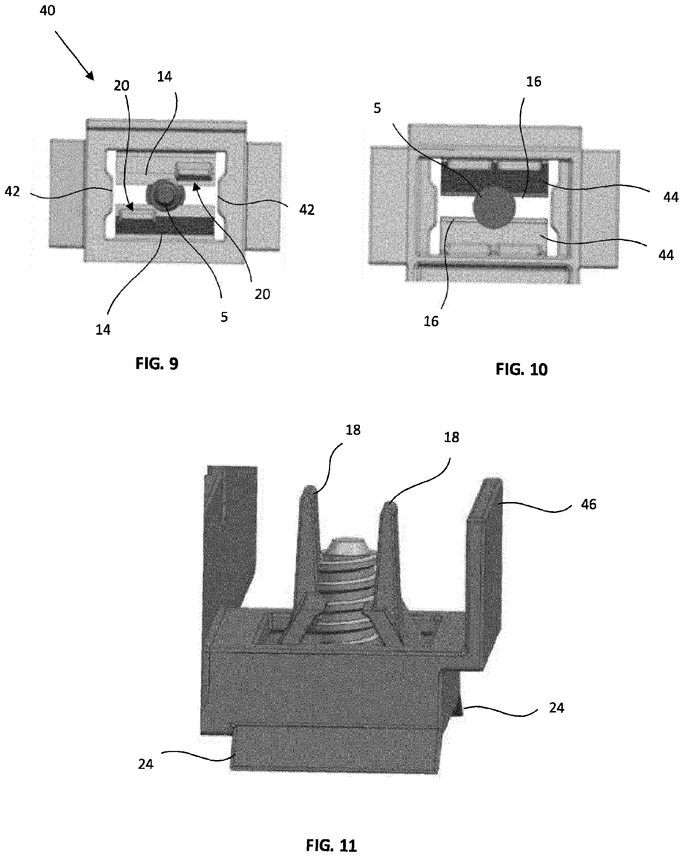

Fixing clip 40 is best illustrated in Figures 9 to 14. The fixing clip 40 has similar structures to those described in relation to fixing clip 10, and similar reference numerals have been used to denote identical features. The fixing clip 40 includes a body having an opening and two protrusions 42 that protrude into the opening. The protrusions 42 protrude in a perpendicular direction to the pair of ribs 14 that grip the stud 5 in the same manner as described above. The edge 16 of each rib 14 extends across the width of the rib 14, which thus provides an elongate gap within which the stud 5 can be gripped. This advantageously increases the tolerance of the stud 5 placement within the fixing clip 40.

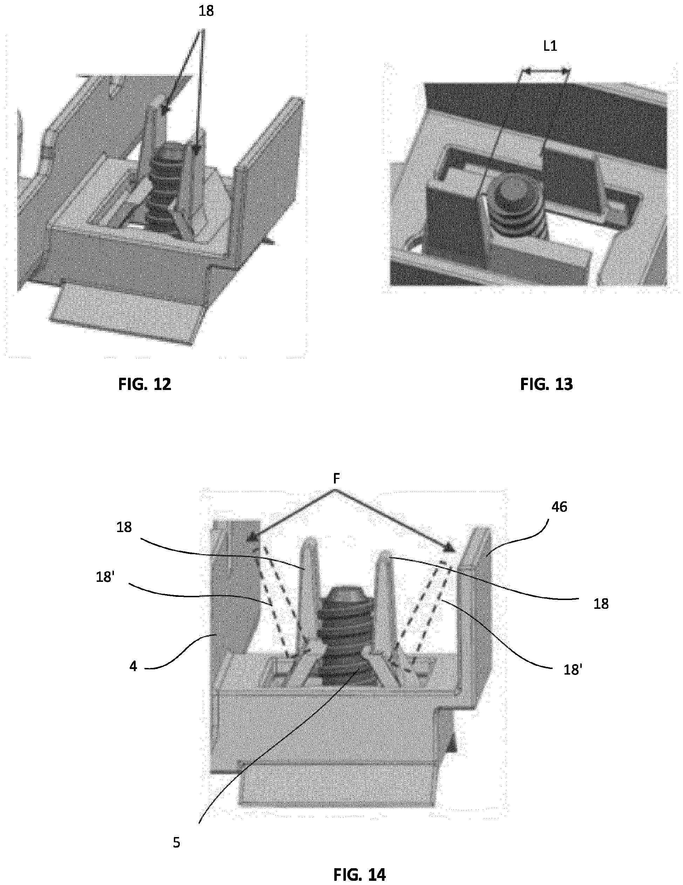

The fixing clip 40 can be opened in a similar manner to fixing clip 10 by a user pressing the opposed engaging surfaces 20 (arrows F). Figure 13 illustrates the offset "L1" between the opposed levers in the perpendicular direction. Figure 14 shows the levers 18 in a first position, where the stud 5 is gripped, and a second position 18', where the levers have been separated from one another which allows for easy extraction of the stud 5.

The fixing clip 40 also includes a wall 46 for limiting the deformation of the lever 18. By providing the wall 46 it is possible to limit the deformation of the lever 18 as the lever 18 will abut the wall 46 before excessive deformation results in plastic deformation of the lever 18. By limiting the deformation of the lever 18 in this way, the present fixing clip 18 ensures the lever 18 only undergoes elastic deformation, which increases the longevity of the fixing clip 40. While a side wall 4 of the cable channel 3 is shown as providing a similar function for the opposed lever 18, it would be apparent this was not essential and a second wall may be provided for limiting the deformation of the lever adjacent the cable channel 3 in the same manner as wall 46. Thus, the fixing clip 40 allows cable channels 3 to be removed and reused. Moreover, the removal of cable channels, facilitated by the fixing clip, can be repeated many times without damaging the cable channel, and without decreasing the performance of fixing points 40 on the stud 5, as the removal of the cable channel 3 is facilitated without compromising retention characteristics. By using both fixing clip 10 and fixing clip 40, it is possible to accommodate larger manufacturing tolerances of stud 5 placement, whilst also a retaining high retention force of the stud.

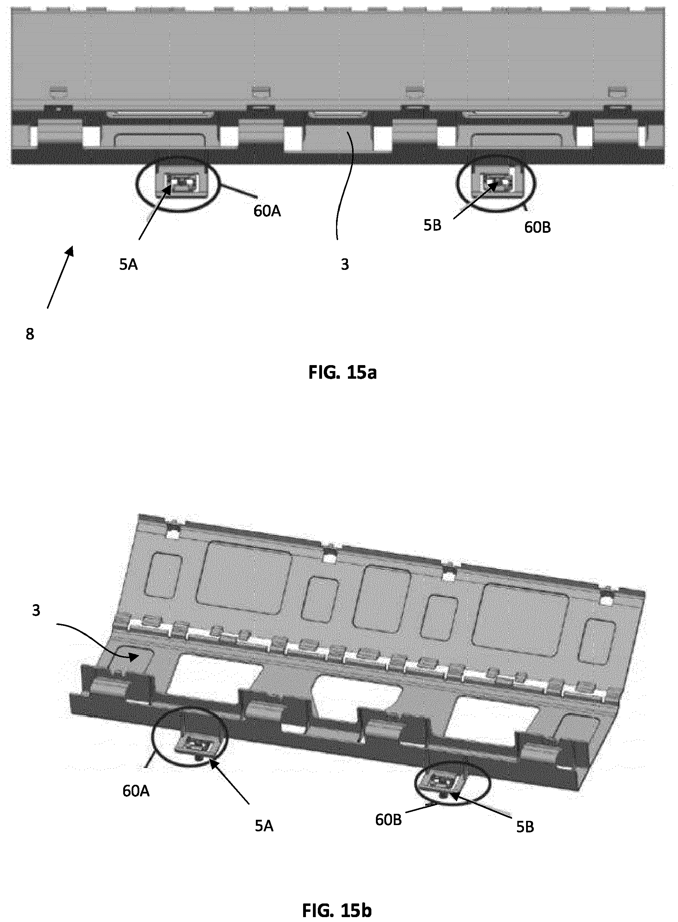

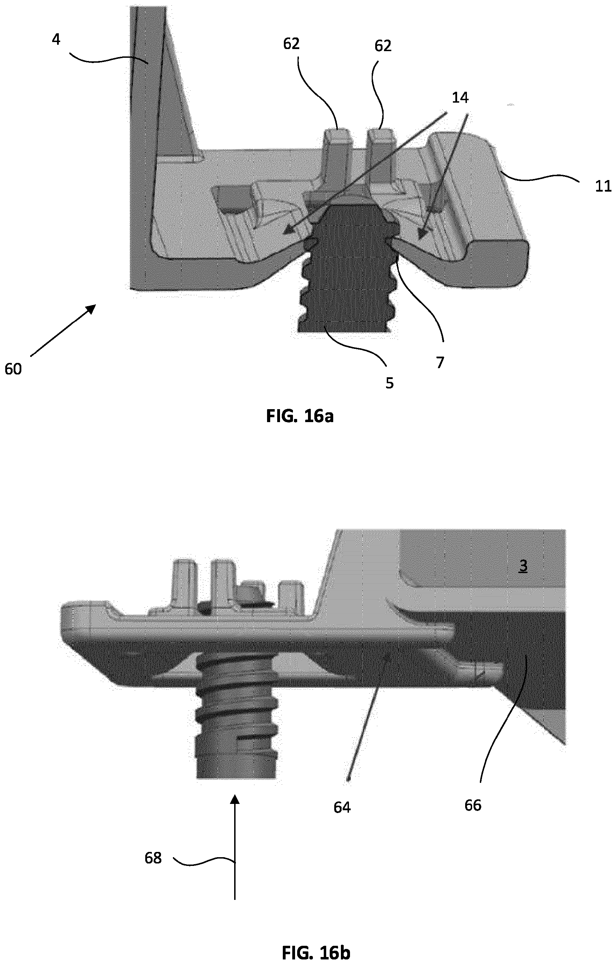

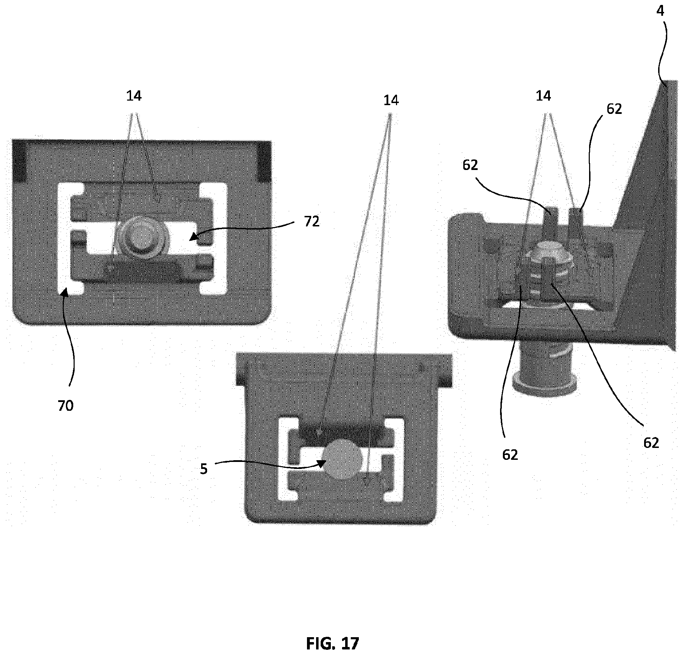

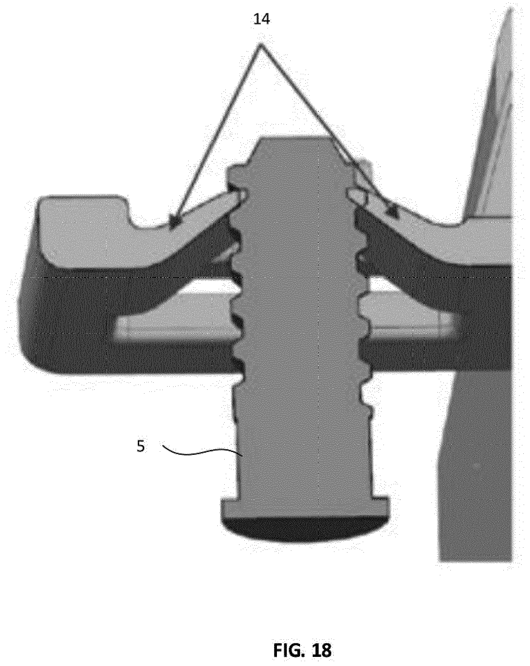

Figures 15 to 19 relate to an assembly 1 having a third exemplary fixing clip 60 and these figures will be referred to interchangeably throughout this description. The cable channel 3 has two fixing clips 60A, 60B secured thereto. The fixing clip 60 has similar structures to those described in relation to fixing clip 10 and fixing clip 40, and similar reference numerals have been used to denote identical features. The fixing clip 60 includes a body 11 providing an opening 70 and a pair of ribs 14 extending from the body 11, each rib 14 having an edge 16 and the pair of edges 16 defining a gap 72 therebetween for gripping the stud 5 in the manner described above. As shown in Figure 17, the gap 72 within which the stud 5 can be gripped is elongate, which accommodates greater tolerances in stud 5 placement on the base plate. By having both fixing clips 40 with an elongate gap 72, both fixing clips 40A, 40B are able to accommodate greater tolerances of stud 5 placement. While the edge 16 of both ribs 14 are shown as extending across the entire width of the respective rib 14, it would be apparent this was not essential and that the edge 16 may only extend partially across the width of one or both ribs 14.

Each rib 14 is also shown having a pair of abutments 62 extending therefrom in a substantially parallel direction to the insertion direction 68 of the stud 5. The pairs of abutments 62 are arranged to abut one another when the stud 5 is moved in the extraction direction (arrows A). The abutment of the pairs of abutments 62 stiffens the ribs 14, which in turn increases the retention force of the ribs 14, further enhancing the grip of the fixing clip 60. It is also advantageous to use the described abutments 62, as the insertion force is not increased due to the presence of the abutments 62. Thus, the fixing clip 60 is provides increased stiffness or resistance when extracting the stud 5, without also having a corresponding increase in stiffness or resistance during insertion of the stud 5. While each rib 14 is shown having a pair of abutments 62, it would be apparent that this was not essential and that one or more than two abutments 62 may be used to stiffen the ribs 14 in the manner described. Similarly, while the abutments 62 are shown extending in a direction substantially parallel to the insertion direction 68, it would be apparent this was not essential, and that the abutments 62 may extend in other directions or have other shapes while still stiffening the ribs 14 in the manner described.

An underside 64 of the body 11 is also offset from an underside 66 of the cable channel 3 in the extraction direction. As the cable channel 3 can be mounted on an insulating foam (not shown) underneath the underside 66, by positioning the underside 64 of the body 11 further from the underside 66 of the channel 3 in the extraction direction, this generates a biasing or pre-loading force on the fixing clip 60 when the cable channel 3 is secured to the stud 5.

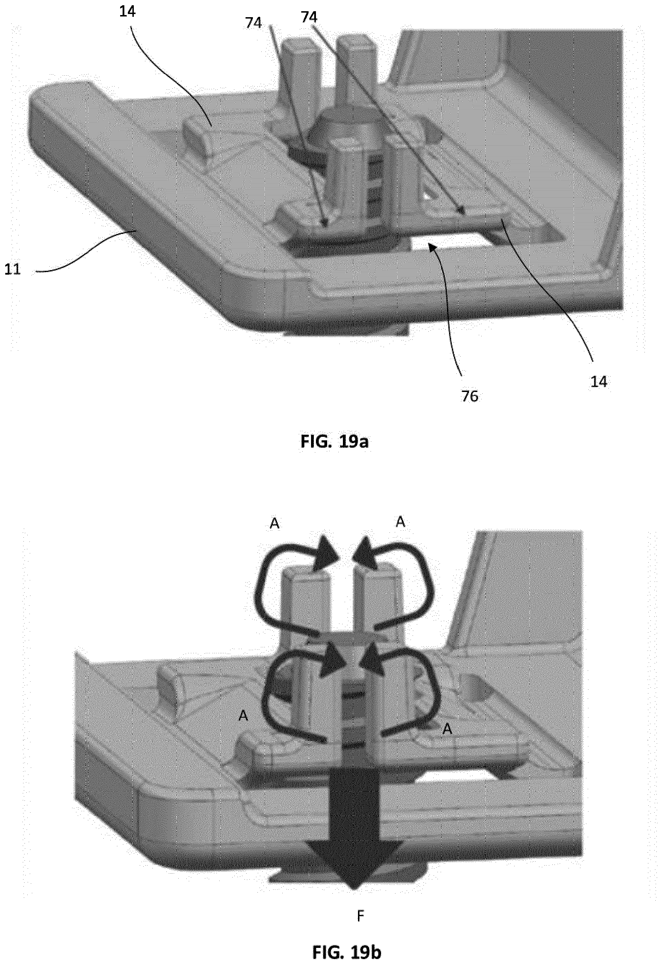

As best shown in Figure 19a, the ribs 14 have an engaging surface 74 for engaging a tool. The tool may be a screwdriver, or any type of tool that can engage the engaging surface 74 to apply a force to the engaging surfaces 74 for separating the ribs 14 from one another. The ribs 14 are also raised above the body 11 to provide a gap 76 to provide a more ergonomic fixing clip 60, as the gap 76 is able to accommodate insertion of the tool from a greater range of angles than if the ribs 14 were not raised above the body 11. Thus, a user can insert a simple tool into the gap 76 under the raised ribs 14 and lever the tool on the body 11 to easily open the ribs with a low force. However, while having the ribs 14 raised above the body 11 is preferable, it would be apparent that this was not essential to the function of the fixing clip 60 or the engaging surfaces 74. While the ribs 14 are shown extending from the body 11 within the opening 70 and protruding above the opening in the insertion direction 68, it would be apparent this was not essential, and that the ribs may extend from other parts of the body 11.

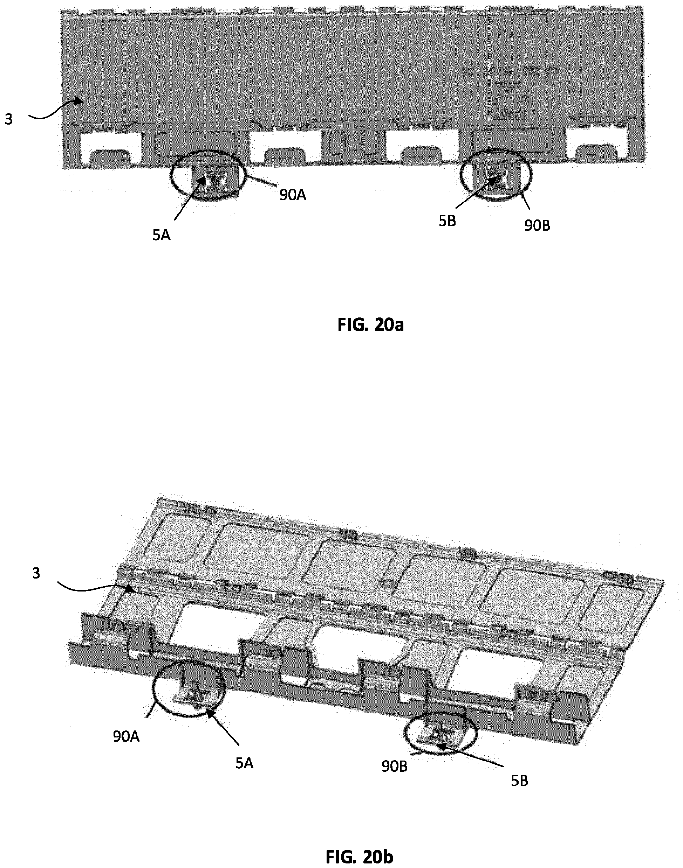

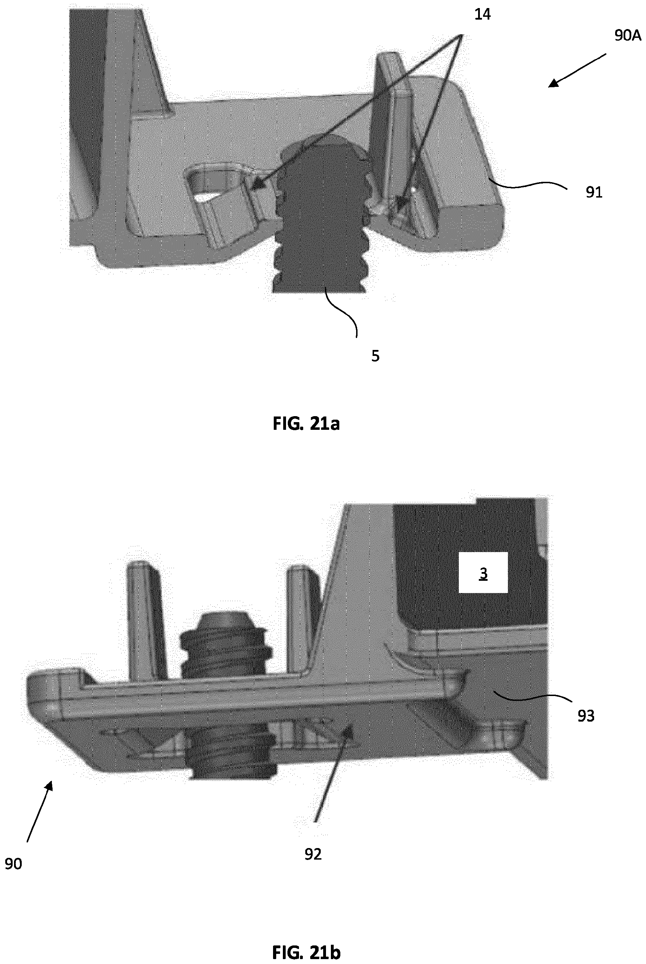

Figures 20 to 25 relate to an assembly 1 having a fourth 90A and fifth 90B exemplary fixing clips and these figures will be referred to interchangeably throughout this description. The cable channel 3 has two different fixing clips 90A, 90B secured thereto. Fixing clips 90A, 90B has similar structures to those described in relation to fixing clips 10, 40 and 60, and similar reference numerals have been used to denote identical features. The fixing clips 90A, 90B include a body 91 providing an opening 94 and a pair of ribs 14 extending from the body 91, each rib 14 having an edge 16 and the pair of edges 16 defining a gap 96 therebetween for gripping the stud 5 in the manner described above.

An underside 92 of the body 91 is offset from an underside 93 of the cable channel 3 in the extraction direction. As the cable channel 3 can be mounted on an insulating foam (not shown) disposed adjacent the underside 92, positioning the underside 92 of the body 91 further from underside 93 of the channel 3 in the extraction direction generates a biasing (or pre-loading) force on the fixing clips 90A, 90B when the cable channel 3 is secured to the stud 5 in the manner described above.

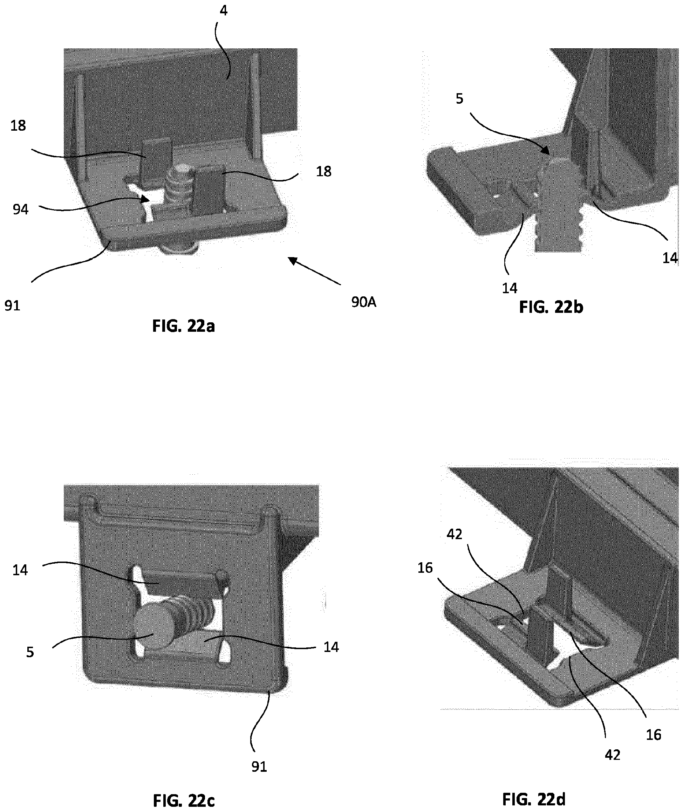

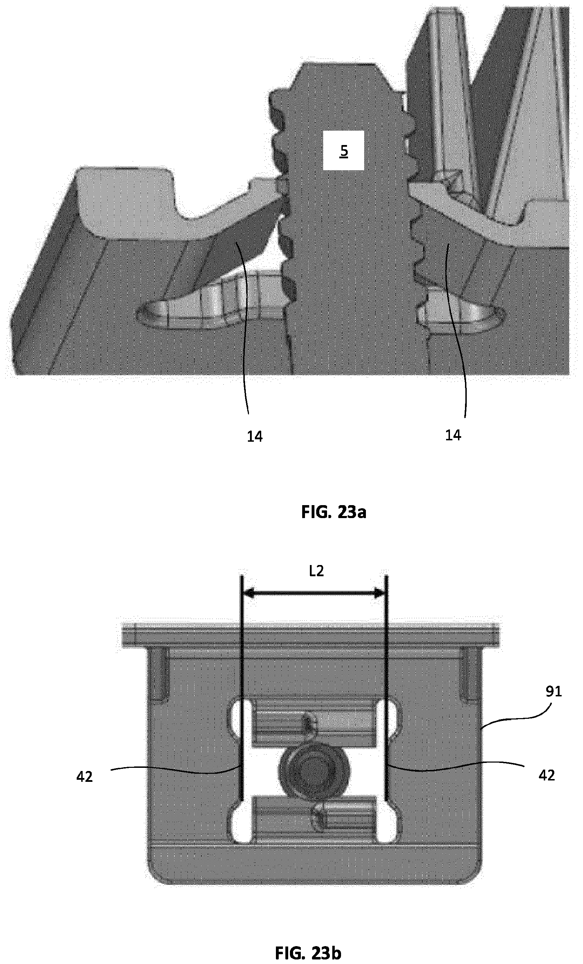

Fixing clip 90A is best illustrated in Figures 22a to 22d and shows each rib 14 has a lever 18 for moving the rib 14 in the manner described above, and an edge 16 for gripping the stud 5 in the manner described above. The body 91 also includes a pair of opposed protrusions 42 extending into the opening 94 for providing an elongate gap 96 between the edges 16 to accommodate greater tolerances ("L2" in Figure 23b) of stud placement. The ribs 14 are also angled to guide the stud 5 into a central position in the fixing clip 90A in the manner described above. The opposed protrusions 42 extend into the opening 94 in a perpendicular direction to the ribs 14.

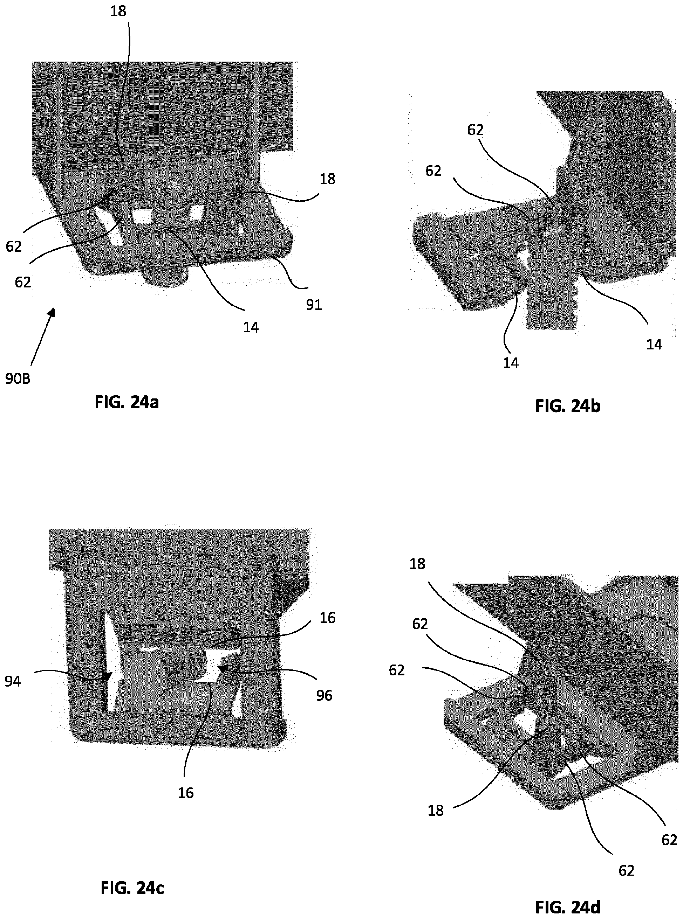

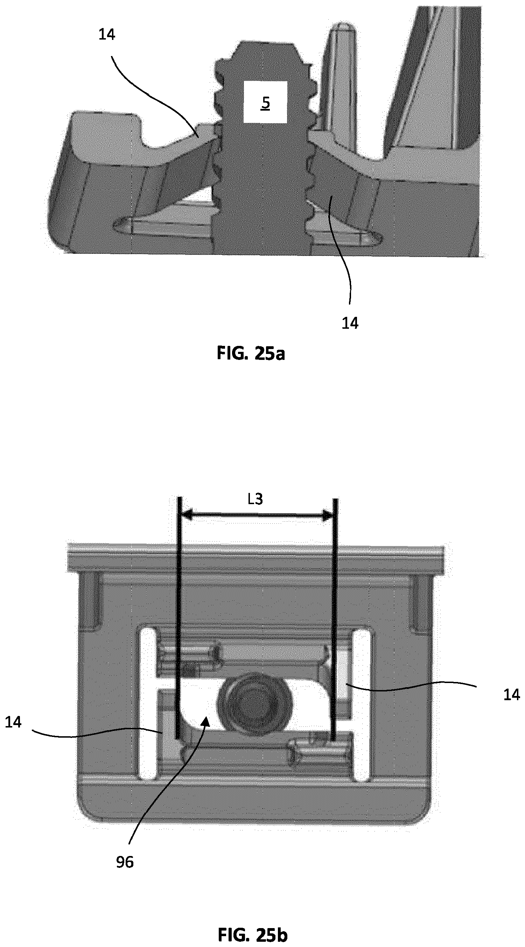

Fixing clip 90B is best illustrated in Figures 24a to 24d and shows each rib 14 has a lever 18 for moving the rib 14 in the manner described above, a pair of abutments 62 for stiffening the ribs 14, and an edge 16 for gripping the stud 5 in the manner described above. Fixing clip 90B differs from fixing clip 90A by not having the pair of opposed protrusions 42. However, an elongate gap 96 is still provided between the edges 16 of fixing clip 90B by edges 16 extending across the width of the ribs 14. Thus, fixing clip 90B is able to accommodate greater tolerances ("L3" in Figure 25b) of stud placement due to the elongate gap 96 as the stud 5. Each rib 14 also has a curved section which extends toward the opposed rib 14. This curved section is shown extending from a side of the rib 14 and provides the greater tolerance of fixing clip 90B. It would be apparent that tolerances L2 and L3 may be the same or may be different depending on the tolerances of the stud placement. The ribs 14 are also angled to guide the stud 5 into a central position in the fixing clip 90A in the manner described above.

The lever 18 of each rib 14 is also shown having an abutment 62 formed integrally therewith and arranged to abut a corresponding abutment 62 on the opposed rib 14. While the illustrated fixing clip 90B shows a lever 18 having an abutment 62 abutting an abutment 62 without a lever formed therewith, it would be apparent that this was not essential. However, by offsetting the levers 18 in a perpendicular direction to the insertion direction 68, the ergonomics of the fixing clip 90B is improved.

By using the combination of fixing clips 90A and 90B, the shaped ribs 14 are able to securely grip the stud, whilst also being optimised to position the cable channel 3 into the desired position on the base plate by accommodating greater tolerances of the position of the studs on the base plate.

The engaging surfaces enable the cable channel 3 to be removable and reusable. This operation can be repeated several times without damaging the cable channel 3 and without decreasing the performance of the fixing clips, for example the insertion force and retention force are maintained over time.

While a pair of ribs 14 have been described in the above examples, it would be apparent that this was not essential, and that in some cases a single rib 14 would still provide the advantages of the present fixing clip. While a threaded stud is shown, it would be apparent that the present fixing clips may be used to secure the assembly to any ridged component, such as a welded pin. The assembly is also illustrated having identical fixing clips, but it would be apparent that different combinations of the disclosed fixing clips could be used to secure the assembly 1. Similarly, while pairs of fixing clips are shown it would be apparent that fewer than two or more than two fixing clips may be used to secure the assembly 1. Similarly, while a cable channel 3 is described, it would be apparent the fixing clips described herein may be used to secure other parts to a base plate, or similar structure. Similarly, while the fixing clip is described as being integral with the cable channel, it would be apparent that the fixing clip may be provided as a separate independent component that can be connected to the cable channel for securing the cable channel in the manner described herein.

Throughout the description and claims of this specification, the words "comprise" and "contain" and variations of them mean "including but not limited to", and they are not intended to (and do not) exclude other moieties, additives, components, integers or steps. Throughout the description and claims of this specification, the singular encompasses the plural unless the context otherwise requires. In particular, where the indefinite article is used, the specification is to be understood as contemplating plurality as well as singularity, unless the context requires otherwise.

Features, integers, characteristics, or groups described in conjunction with a particular aspect, embodiment or example of the invention are to be understood to be applicable to any other aspect, embodiment or example described herein unless incompatible therewith. All of the features disclosed in this specification (including any accompanying claims, abstract and drawings), and/or all of the steps of any method or process so disclosed, may be combined in any combination, except combinations where at least some of such features and/or steps are mutually exclusive. The invention is not restricted to the details of any foregoing embodiments.

## Claims

1. A fixing clip (10, 40, 90) for securing an assembly (1) to a ridged component (5), the fixing clip (10, 40, 90) comprising:
a first resiliently deformable rib (14) and a second resiliently deformable rib (14) opposed to the first resiliently deformable rib (14), the first and second resiliently deformable ribs (14) arranged to engage the ridged component (5) and being shaped such that:
movement of the ridged component (5) in a first direction relative to the fixing clip (10, 40, 90) causes the first and second resiliently deformable ribs (14) to deform, and
movement of the ridged component (5) in a second direction opposite to the first direction is prevented by engagement between the first and second resiliently deformable ribs (14) and the ridged component (5),
and wherein the first and second resiliently deformable ribs (14) comprise an engaging surface (20) arranged such that upon application of an external force to the engaging surface (20) the first and second resiliently deformable ribs (14) are configured to deform so as to release the ridged component (5) for movement in the second direction, and
**characterised in that** each of the first and second resiliently deformable ribs (14) comprises at least one abutment (62), and wherein the abutment (62) of the first resiliently deformable rib (14) is arranged to abut the abutment (62) of the second resiliently deformable rib (14) upon movement of the ridged component (5) in the second direction so as to limit the deformation of the first and second resiliently deformable ribs (14) towards one another.

2. A fixing clip according to claim 1, wherein the first and second resiliently deformable ribs (14) extend from a body (11, 91) of the fixing clip (10, 40, 90), and wherein the body (11, 91) and the engaging surface (20) define a gap (96) arranged to receive an external tool for engaging the engaging surface (20).

3. A fixing clip according to claim 2, wherein a portion of the engaging surface (20) protrudes above the body (11, 91) in the first direction.

4. A fixing clip according to claim 2 or 3, comprising a lever (18) extending from the first and second resiliently deformable ribs (14) in the first direction and having the engaging surface (20) formed thereon.

5. A fixing clip according to claim 4 comprising at least one wall (4, 46) arranged to limit the deformation of the lever (18) when the external force is applied to the engaging surface (20) to release the ridged component (5).

6. A fixing clip according to any of claims 2 to 5 comprising a resiliently deformable member (24) extending away from the body (11, 91), and wherein the resiliently deformable member (24) is configured, in use, to abut a component and apply a biasing force to the fixing clip (10, 40, 90) in the second direction.

7. A fixing clip according to any preceding claim , wherein the first and second resiliently deformable ribs (14) define an opening (13, 94) within which the ridged component (5) is receivable to be engaged by the first and second resiliently deformable ribs (14).

8. A fixing clip according to claim 7, comprising a second pair of opposed ribs (26, 42) arranged in a perpendicular direction to the first and second resiliently deformable ribs (14), and wherein the second pair of ribs (26, 42) are shaped to guide the ridged component (5) towards the opening (13, 94).

9. A fixing clip according to claim 7 or 8, wherein the opening (13, 94) has an elongate profile.

10. A fixing clip according to claim 4 or any of claims 5 to 9 when dependent on claim 4, wherein the engaging surface (20) of the second resiliently deformable rib (14) is formed on a lever (18) extending from the second resiliently deformable rib (14) in the first direction, wherein the first and second resiliently deformable ribs (14) are spaced apart in a third direction, and wherein the levers (18) of the first and second resiliently deformable ribs (14) are offset from one another in a fourth direction perpendicular to the third direction.

11. An assembly (1) comprising one or more fixing clips (10, 40, 90) according to any preceding claim.

12. An assembly according to claim 11, wherein the assembly (1) comprises a cable channel (3).

## Patentansprüche

1. Befestigungsklammer (10, 40, 90) zum Befestigen einer Baugruppe (1) an einer gerippten Komponente (5), die Befestigungsklammer (10, 40, 90) aufweisend:
eine erste elastisch verformbare Rippe (14) und eine zweite elastisch verformbare Rippe (14), die der ersten elastisch verformbaren Rippe (14) gegenüberliegt, wobei die erste und die zweite elastisch verformbare Rippe (14) so angeordnet sind, dass sie in die gerippte Komponente (5) eingreifen und so geformt sind, dass:
eine Bewegung der gerippten Komponente (5) in einer ersten Richtung relativ zu der Befestigungsklammer (10, 40, 90) eine Verformung der ersten und der zweiten elastisch verformbaren Rippen (14) bewirkt, und
eine Bewegung der gerippten Komponente (5) in einer zweiten, der ersten Richtung entgegengesetzten Richtung durch den Eingriff zwischen der ersten und der zweiten elastisch verformbaren Rippe (14) und der gerippten Komponente (5) verhindert wird,
und wobei die erste und die zweite elastisch verformbare Rippe (14) eine Eingriffsfläche (20) aufweisen, die angeordnet ist, dass die erste und die zweite elastisch verformbare Rippe (14) bei Aufbringen einer äußeren Kraft auf die Eingriffsfläche (20) zum Verformen konfiguriert sind, um die gerippte Komponente (5) zur Bewegung in der zweiten Richtung freizugeben, und
**dadurch gekennzeichnet, dass** jede der ersten und der zweiten elastisch verformbaren Rippe (14) zumindest einen Anschlag (62) aufweist, wobei der Anschlag (62) der ersten elastisch verformbaren Rippe (14) zum Anliegen an dem Anschlag (62) der zweiten elastisch verformbaren Rippe (14) bei Bewegung der gerippten Komponente (5) in der zweiten Richtung angeordnet ist, um die Verformung der ersten und der zweiten elastisch verformbaren Rippe (14) aufeinander zu zu begrenzen.

2. Befestigungsklammer nach Anspruch 1, wobei sich die erste und die zweite elastisch verformbare Rippe (14) von einem Körper (11, 91) der Befestigungsklammer (10, 40, 90) aus erstrecken und wobei der Körper (11, 91) und die Eingriffsfläche (20) einen Spalt (96) definieren, der zum Aufnehmen eines externen Werkzeugs für den Eingriff mit der Eingriffsfläche (20) angeordnet ist.

3. Befestigungsklammer nach Anspruch 2, wobei ein Abschnitt der Eingriffsfläche (20) in der ersten Richtung über den Körper (11, 91) vorsteht.

4. Befestigungsklammer nach Anspruch 2 oder 3, aufweisend einen sich von der ersten und der zweiten elastisch verformbaren Rippe (14) in der ersten Richtung erstreckenden Hebel (18) und eine daran ausgebildete Eingriffsfläche (20).

5. Befestigungsklammer nach Anspruch 4, zumindest aufweisend eine Wand (4, 46), die zum Begrenzen der Verformung des Hebels (18) angeordnet ist, wenn die äußere Kraft zum Freigeben der gerippten Komponente (5) auf die Eingriffsfläche (20) aufgebracht wird.

6. Befestigungsklammer nach einem der Ansprüche 2 bis 5, aufweisend ein sich von dem Körper (11, 91) weg erstreckendes, elastisch verformbares Element (24), und wobei das elastisch verformbare Element (24) bei Verwendung so konfiguriert ist, dass es an einer Komponente anliegt und eine Vorspannkraft auf die Befestigungsklammer (10, 40, 90) in der zweiten Richtung ausübt.

7. Befestigungsklammer nach einem der vorhergehenden Ansprüche, wobei die erste und die zweite elastisch verformbare Rippe (14) eine Öffnung (13, 94) definieren, innerhalb derer die gerippte Komponente (5) aufgenommen werden kann, um von der ersten und der zweiten elastisch verformbaren Rippe (14) in Eingriff genommen zu werden.

8. Befestigungsklammer nach Anspruch 7, aufweisend ein zweites Paar gegenüberliegender Rippen (26, 42), die in einer senkrechten Richtung zu der ersten und der zweiten elastisch verformbaren Rippe (14) angeordnet sind, wobei das zweite Paar Rippen (26, 42) zum Führen der gerippten Komponente (5) in Richtung der Öffnung (13, 94) geformt ist.

9. Befestigungsklammer nach Anspruch 7 oder 8, wobei die Öffnung (13, 94) ein längliches Profil aufweist.

10. Befestigungsklammer nach Anspruch 4 oder einem der Ansprüche 5 bis 9 in Abhängigkeit von Anspruch 4, wobei die Eingriffsfläche (20) der zweiten elastisch verformbaren Rippe (14) an einem Hebel (18) ausgebildet ist, der sich von der zweiten elastisch verformbaren Rippe (14) in die erste Richtung erstreckt, wobei die erste und die zweite elastisch verformbare Rippe (14) in einer dritten Richtung voneinander beabstandet sind, und wobei die Hebel (18) der ersten und der zweiten elastisch verformbaren Rippe (14) in einer vierten Richtung senkrecht zu der dritten Richtung gegeneinander versetzt sind.

11. Baugruppe (1), aufweisend eine oder mehrere Befestigungsklammern (10, 40, 90) nach einem der vorhergehenden Ansprüche.

12. Baugruppe nach Anspruch 11, wobei die Baugruppe (1) einen Kabelkanal (3) aufweist.

## Revendications

1. Pince de fixation (10, 40, 90) pour fixer un ensemble (1) à un composant nervuré (5), le pince de fixation (10, 40, 90) comprenant :
une première nervure élastiquement déformable (14) et une seconde nervure élastiquement déformable (14) opposée à la première nervure élastiquement déformable (14), les première et seconde nervures déformables élastiquement (14) étant agencées pour venir en prise avec le composant nervuré (5) et étant formées de telle sorte que :
le déplacement du composant nervuré (5) dans une première direction par rapport à la pince de fixation (10, 40, 90) amène les première et seconde nervures déformables de manière élastique (14) à se déformer, et
le déplacement du composant nervuré (5) dans une seconde direction opposée à la première direction est empêché par l'engagement entre les première et seconde nervures déformables de manière élastique (14) et le composant nervuré (5),
et dans lequel les première et seconde nervures déformables élastiquement (14) comprennent une surface d'engagement (20) agencée de telle sorte que lors de l'application d'une force externe à la surface d'engagement (20) les première et seconde nervures déformables élastiquement (14) sont configurées pour se déformer de manière à libérer le composant nervuré (5) pour un mouvement dans la seconde direction, et
**caractérisé en ce que** chacune des première et seconde nervures déformables élastiquement (14) comprend au moins une butée (62), et dans lequel la butée (62) de la première nervure élastiquement déformable (14) est agencée pour buter contre la butée (62) de la seconde nervure élastiquement déformable (14) lors du déplacement du composant nervuré (5) dans la seconde direction de manière à limiter la déformation des première et seconde nervures déformables élastiquement (14) l'une vers l'autre.

2. Pince de fixation selon la revendication 1, dans laquelle les première et seconde nervures déformables élastiquement (14) s'étendent à partir d'un corps (11, 91) de la pince de fixation (10, 40, 90), et dans laquelle le corps (11, 91) et la surface d'engagement (20) définissent un espace (96) agencé pour recevoir un outil externe pour engager la surface d'engagement (20).

3. Pince de fixation selon la revendication 2, dans laquelle une partie de la surface d'engagement (20) fait saillie au-dessus du corps (11, 91) dans la première direction.

4. Pince de fixation selon la revendication 2 ou 3, comprenant un levier (18) s'étendant depuis les première et seconde nervures déformables élastiquement (14) dans la première direction et ayant la surface d'engagement (20) formée sur celle-ci.

5. Pince de fixation selon la revendication 4, comprenant au moins une paroi (4, 46) agencée pour limiter la déformation du levier (18) lorsque la force externe est appliquée à la surface d'engagement (20) pour libérer le composant nervuré (5).

6. Pince de fixation selon l'une quelconque des revendications 2 à 5, comprenant un élément déformable élastiquement (24) s'étendant à l'opposé du corps (11, 91), et dans laquelle l'élément déformable élastiquement (24) est configuré, en utilisation, pour buter contre un composant et appliquer une force de sollicitation à la pince de fixation (10, 40, 90) dans la seconde direction.

7. Pince de fixation selon l'une quelconque des revendications précédentes, dans laquelle les première et seconde nervures déformables élastiquement (14) définissent une ouverture (13, 94) à l'intérieur de laquelle le composant nervuré (5) peut être reçu pour être engagé par les première et seconde nervures déformables élastiquement (14).

8. Pince de fixation selon la revendication 7, comprenant une seconde paire de nervures opposées (26, 42) agencées dans une direction perpendiculaire aux première et seconde nervures déformables élastiquement (14), et dans laquelle la seconde paire de nervures (26, 42) est formée pour guider le composant nervuré (5) vers l'ouverture (13, 94).

9. Pince de fixation selon la revendication 7 ou 8, dans laquelle l'ouverture (13, 94) a un profil allongé.

10. Pince de fixation selon la revendication 4 ou l'une quelconque des revendications 5 à 9 lorsqu'elles dépendent de la revendication 4, dans laquelle la surface d'engagement (20) de la seconde nervure déformable élastiquement (14) est formée sur un levier (18) s'étendant à partir de la seconde nervure déformable élastiquement (14) dans la première direction, dans lequel les première et deuxième nervures déformables élastiquement (14) sont espacées dans une troisième direction, et dans lequel les leviers (18) des première et deuxième nervures déformables élastiquement (14) sont décalés l'un de l'autre dans une quatrième direction perpendiculaire à la troisième direction.

11. Ensemble (1) comprenant une ou plusieurs pinces de fixation (10, 40, 90) selon l'une quelconque des revendications précédentes.

12. Ensemble selon la revendication 11, dans lequel l'ensemble (1) comprend un canal de câble (3).
